(19) Europäisches Patentamt

European Patent Office

Office européen des brevets

(11) **EP 0 787 970 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(51) Int Cl.7: **G01B 11/30**, G01N 21/89, G01B 11/24, G01B 11/00

(21) Anmeldenummer: **97101814.8**

(22) Anmeldetag: **05.02.1997**

(54) **Vorrichtung zur Inspektion der Oberfläche von Holz zwecks Feststellung von Oberflächenmerkmalen und Verfahren hierzu**

Wood surface inspection device for determination of surface characteristics and associated method

Dispositif d'inspection de la surface du bois pour la détermination des caractéristiques de surface et procédé associé

(84) Benannte Vertragsstaaten:
**CH DE FI FR LI SE**

(30) Priorität: **05.02.1996 DE 19604075**

(43) Veröffentlichungstag der Anmeldung:
**06.08.1997 Patentblatt 1997/32**

(73) Patentinhaber: **Baumer Optronic GmbH 01454 Radeberg/bei Dresden (DE)**

(72) Erfinder:
• **Wollmann, Christian, Dr.
01465 Liegau-Augustusbad (DE)**
• **Ihlefeld, Joachim, Dr.
01097 Dresden (DE)**
• **Wenert, Lutz
01474 Weissig (DE)**

(74) Vertreter: **Ostertag, Ulrich, Dr. et al Patentanwälte Dr. Ulrich Ostertag Dr. Reinhard Ostertag Eibenweg 10 70597 Stuttgart (DE)**

(56) Entgegenhaltungen:
EP-A- 0 234 997          DE-A- 2 654 872
DE-B- 2 811 744          GB-A- 2 117 898

## EP 0 787 970 B1

**Beschreibung**

Die Erfindung betrifft eine Vorrichtung zur Inspektion der Oberfläche von Holz nach dem Oberbegriff des Anspruches 1 sowie ein Verfahren zur Inspektion der Oberfläche von Holz nach dem Oberbegriff des Anspruches 11.

Zur Oberflächeninspektion von Werkstoffen ist es bekannt, mit CCD-Zeilen- oder Matrixkameras sowie mit Laserscannern die betreffende Oberfläche abzutasten und mit Bildverarbeitungsmitteln Grauwert- bzw. Farbbilder zu analysieren.

Bei natürlichen Werkstoffen wie Holz tritt dabei eine Reihe von Problemen auf, die durch den indirekten Zusammenhang der meisten zu definierenden Merkmale mit der Remission zusammenhängen. So führen schon unterschiedliche Holzfarben zu unterschiedlichen Erkennungsraten. Bei der Verarbeitung von Hölzern beispielsweise im Tür- und Fensterbau oder bei der Herstellung von Furnieren ist es notwendig, daß die zu verarbeitenden Hölzer auf ihre Qualität hin untersucht werden, ob die Hölzer Risse, Astlöcher oder Überhöhungen und Vertiefungen aufweisen, die sie für den vorgesehenen Einsatzzweck unbrauchbar machen. Bis heute werden deshalb solche Inspektionen von Hölzern weitestgehend von Personen durchgeführt.

Ferner gibt es eine Reihe von technischen Problemen, die allgemein mit der prozeßbedingten hohen Tiefenschärfe und gleichzeitig hohen Auflösung sowie Transportgeschwindigkeit des Holzes zusammenhängen. Dafür sind relativ aufwendige Beleuchtungseinrichtungen mit sehr hoher Leistung notwendig.

Durch die WO 89/07672 ist eine Vorrichtung zum optischen Abtasten einer Objektebene mittels eines Sensors und einer Lichtquelle unter erschwerten atmosphärischen Bedingungen zwecks Erkennung sich ändernder Überhöhungen auf der Ebene bekanntgeworden, bei der zur Aufteilung des ausgesandten Lichtbündels in einen Tast- und einen Referenzbereich ein teildurchlässiger Spiegel und eine Umlenkoptik dienen und so zwei achsparallele Teilstrahlen gebildet werden, die auf eine Zweiquadrantendiode oder auf einen CCD-Matrixsensor fallen und dort nach Tast- und Referenzbereich getrennt elektrisch ausgewertet werden. Die Vorrichtung ist in einem Gehäuse angeordnet, welches ein Austritts- und ein Eintrittsfenster für die Lichtstrahlenbündel aufweist, wobei vor den Fenstern Druckluftschleusen angeordnet sind, um die Lichtquelle und den Sensor von die Atmosphäre verunreinigenden Partikeln zu säubern. Weitere Veröffentlichungen hierzu sind die EP 0 634 648 A1, DE 2 611 514 B2 sowie die DE 3 805 968 A1.

Der Erfindung liegt die Aufgabe zugrunde, eine Vorrichtung und ein Verfahren der eingangs genannten Art zu schaffen, mit denen eine selbsttätige Inspektion der Oberfläche von Hölzern fortlaufend durchgeführt werden kann, wobei eine Reihe von Merkmalen, wie Risse, Astlöcher oder Überhöhungen und Vertiefungen, sicher erkannt werden sollen und sowohl eine Grauwertdarstellung als auch weitere Merkmale gewonnen werden; die Vorrichtung soll daneben einfach und kostengünstig aufgebaut sein.

Diese Aufgabe wird, was die Vorrichtung angeht, mit den Merkmalen des Anspruches 1 gelöst.

Zur Strahlteilung kann im remittierten Strahlenbündel ein Strahlteiler, vorzugsweise ein Teilerspiegel angeordnet sein, der das Strahlenbündel vorzugsweise hälftig aufteilt; danach können in jedem Teilstrahlenbündel hinter dem Strahlteiler zur Fokussierung der Teil-Strahlenbündel auf die optoelektrischen Empfangselemente Linsen angeordnet sein.

Das Objektiv zum Erzeugen einer Zwischenbildebene kann sich nach dem Teilerspiegel und vor dem optischen Verlaufsfilter innerhalb des mindestens einen Kanals, der ein optisches Verlaufsfilter aufweist, befinden.

Alternativ kann sich das Objektiv auch vor dem Teilerspiegel befinden.

Der Sensor kann in einem Gehäuse angeordnet sein, welches zum Austritt des Laserstrahls einen schmalen, in der Länge der Auslenkung des Laserstrahls angepassten Längsschlitz und zum Eintritt des remittierten Strahlenbündels eine Bohrung als Eintrittspupille aufweisen, wobei sich innerhalb des Gehäuses eine Einrichtung zur Erzeugung eines Luftüberdruckes befindet und der Luftüberdruck über den Längsschlitz und die Eintrittspupille nach außen abströmende Luftströme erzeugt. Die Eintrittspupille weist einen sehr kleinen Durchmesser auf und bildet zusammen mit dem Objektiv vor dem Teilerspiegel ein Nadelöhrobjektiv.

Die optoelektrischen Empfangselemente können Fotodioden, vorzugsweise pin-Fotodioden, sein.

Das optoelektrische Empfangselement in jedem Kanal mit optischem Verlaufsfilter zur Modulation des Lichtstromes kann ein optopositionsempfindliches Bauelement, vorzugsweise ein hochgeschwindigkeitsfähiges PSD-Bauelement sein.

Der Laserscanner kann aus einem GaAs-Laser mit einem Polygon-Spiegelrad oder mit einem elastisch aufgehängten Mikrospiegel bestehen.

Alle Kanäle können bis auf das optische Verlaufsfilter gleich aufgebaut sein.

Die oben genannte Aufgabe wird, was das Verfahren angeht, mit den im Anspruch 11 angegebenen Merkmalen gelöst.

Dabei kann die Lage des Bildpunktes in Transportrichtung des Objektes in ein Verhältnis der beiden Lichtströme umgewandelt werden, das unabhängig vom Wert der Remission ist. Das Verhältnis der Lichtströme kann in einer digitalen oder analogdigitalen Vorverarbeitung erzeugt werden.

Bei einer digitalen Vorverarbeitung der Lichtströme kann aus dem sich ergebenden Profil eine Wahrscheinlichkeit als Maß für das tatsächliche Auftreten eines gesuchten Merkmals errechnet werden und die zu detektierenden Merkmale, die durch eine eindeutige Störung des Profils beschrieben werden können, können mit einem Convolver mit anschließendem Schwellwertvergleich aufgefunden werden.

Der Laserstrahl des Laserscanners strahlt vorzugsweise unter einem Winkel von 45° mit einer möglichen Abweichung von ± 25°, vorzugsweise jedoch nur ± 15°, zur Normalen der Holzoberfläche auf diese ein und der reflektierte Strahl fällt vorzugsweise in Richtung der Normalen mit einer möglichen Abweichung von ± 25°, vorzugsweise ± 15°, auf die Empfangselemente ein, die positionsempfindliche optoelektrische Emfangselemente, wie PSD-Bauelemente, sind.

Das erfindungsgemäße Verfahren besitzt den Vorteil, daß es eine völlig selbsttätige Inspektion der Oberfläche von Hölzern fortlaufend gestattet, wobei eine Reihe von Merkmalen, wie Risse, Astlöcher oder Überhöhungen und Vertiefungen, sicher erkannt werden und danach eine Aussortierung erfolgen kann. Vorteilhafterweise werden durch das Verfahren sowohl eine Grauwertdarstellung als auch weitere Merkmale, wie das Profil der Hölzer, gewonnen, so daß Rißbildungen eindeutig und in ihrer Ausdehnung erfasst werden können. Die erfindungsgemäße Vorrichtung ist einfach und kostengünstig aufgebaut und kann an einer Vielzahl von Holzverarbeitungsautomaten nachgerüstet werden.

Ein Ausführungsbeispiel der Erfindung wird nachfolgend anhand der Zeichnung näher erläutert; es zeigen

Figur 1   eine schematische Ansicht einer Vorrichtung mit zwei Kanälen und einem abzutastenden Holz, welches in y-Richtung bewegt wird;

Figur 2   eine schematische Darstellung der beiden Kanäle der Vorrichtung der Figur 1; und

Figur 3   ein elektrisches Blockschaltbild zur Auswertung der Fotoströme aus den beiden Kanälen

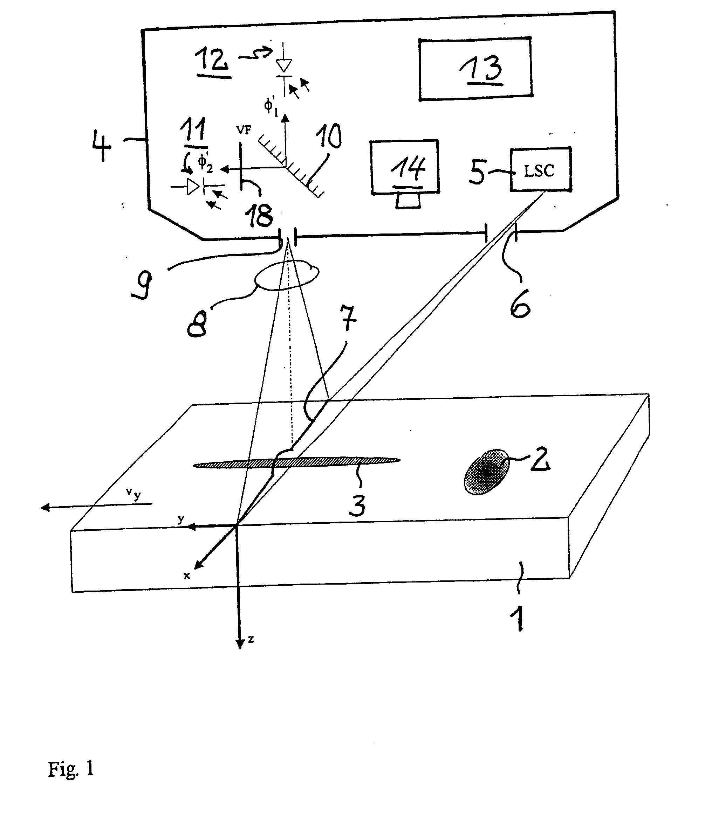

Nach Figur 1 besteht der Sensor aus einem Laserscanner 5, der einen monochromatischen Laserstrahl 7 erzeugt, welcher mittels eines Polygon-Spiegelrades oder mittels eines elastisch aufgehängten Mikrospiegels über die Breite x eines Objektes 1, vorzugsweise eines Holzes 1, geführt wird. Das Holz 1 wird in y-Richtung mit der Geschwindigkeit $v_y$ bewegt. Der Laserscanner 5 ist vorzugsweise ein GaAs-Laser. Ein (nichtgezeigtes) Objektiv im Strahlengang des Laserscanners 5 gewährleistet einen gut konvergierenden, feinen Laserstrahl 7, der damit einen großen Tiefenschärfebereich der Abtastung ermöglicht.

Ein (nichtgezeigter) Inkrementgeber ist einerseits mit der Antriebsmaschine für das Holz und andererseits mit dem Laserscanner 5 gekoppelt. Der Geber synchronisiert die Drehzahl des Polygonspiegelrades oder die Schwingfrequenz des Mikrospiegels mit der Geschwindigkeit des Holzes, wobei die Synchronisation vorzugsweise quadratische Bildpunkte mit konstanter Größe ergibt. Ferner liefert der Geber jeweils einen Takt für einen nachgeschalteten Rechner 13 zur Verarbeitung der empfangenen Meßsignale.

Ein Empfänger zum Empfang des remittierten Strahlenbündels 8 des Laserlichts besteht im wesentlichen aus zwei Kanälen 11, 12 mit je einem optoelektrischen Empfangselement 19,20, welches vorzugsweise Fotodioden, insbesondere pin-Fotodioden, sind.

Laserscanner 5 und Empfangskanäle 11, 12 sind in einem gemeinsamen Gehäuse 4 angeordnet, wobei zum Austritt des Laserstrahls 7 das Gehäuse 4 einen Längsschlitz 6 aufweist. Der Längsschlitz 6 verläuft dergestalt, daß die optische Achse des Lasers in einem Winkel von 45 Grad zur Flächennormalen der Oberfläche des Holzes 1 steht. Die optische Achse des Empfängers steht vorzugsweise senkrecht zur Oberfläche des Holzes 1, wobei im Gehäuse 4 eine Bohrung 9 als Eintrittspupille des remittierten Strahlenbündels 8 angeordnet ist.

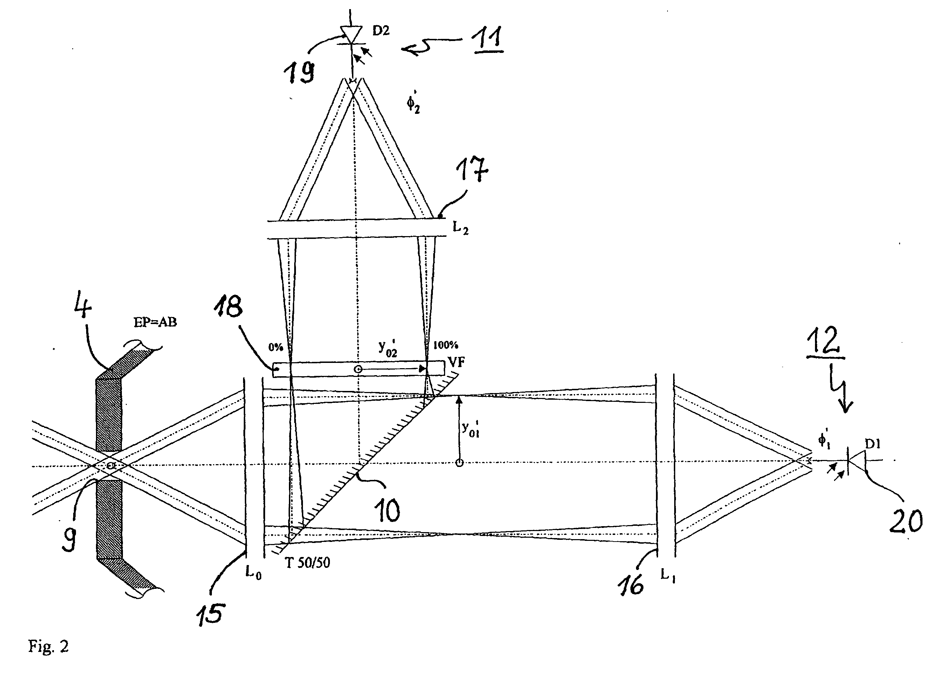

Gemäß Figur 2 ist hinter der Eintrittspupille 9 oder Bohrung innerhalb des Gehäuses 4 ein Objektiv 15 angeordnet, das zusammen mit der sehr kleinen Eintrittspupille 9 ein sogenanntes Nadelöhrobjektiv bildet und das zum Erzeugen einer Zwischenbildebene dient. In Richtung des remittierten Strahlenbündels 8 befindet sich hinter dem Objektiv 15 eine Einrichtung zur Aufteilung des remittierten Strahlenbündels, vorzugsweise Teilerspiegel 10 mit einem Teilungsverhältnis von 50:50. Der durch den Teilerspiegel 10 tretende Lichtstrom $\phi'_1$ gelangt in den Kanal 12 und wird durch ein Objektiv 16 auf ein optoelektrisches Empfangselement 20, vorzugsweise pin-Fotodiode, fokussiert. Der durch den Teilerspiegel 10 umgelenkte Teil des Lichtstroms $\phi'_2$ gelangt in den Kanal 11, in welchem sich in der Zwischenbildebene ein Verlaufsfilter 18 befindet, welches eine lineare Veränderung des Lichtstromes $\phi'_2$ als Funktion der Koordinate $y'_{02}$ durchführt, unter Vernachlässigung von Abbildungsfehlern und Vignettierung. Das Verlaufsfilter 18 bewirkt entsprechend der Auslenkung des Laserstrahls 7 in y-Richtung, daß das sich ergebende remittierte Strahlenbündel 8 örtlich unterschiedlich auf das Verlaufsfilter 18 fällt, das den Lichtstrom ortsabhängig moduliert. Nach dem Verlaufsfilter 18 befindet sich ein Objektiv 17, das wiederum den Lichtstrom $\phi'_2$ auf ein optoelektrisches Empfangselement 19, vorzugweise pin-Fotodiode, fokussiert. Die Kanäle 11, 12 sind mit Ausnahme der Verlaufsfilters 18 völlig gleich aufgebaut. Die Bohrung 9 der Eintrittspupille ist somit optisch symmetrisch zu den optoelektrischen Empfangselementen 19, 20.

Ebenso ist es möglich, die Zwischenbildebene erst nach dem Teilerspiegel zu erzeugen und dazu ein Objektiv nach dem Teilerspiegel vor dem Verlaufsfilter anzuordnen.

Der Laserscanner 5 scannt die Oberfläche des Holzes 1 in einer Ebene unter einem Winkel von 45 Grad zur Flächennormale der Holzfläche ab. Bei ideal ebener Oberfläche scannt der Laserstrahl 7 die x-Achse des kartesischen Koordinatensystems xyz. Falls die Oberfläche Risse (z<0) aufweist, so wandert der Abtastpunkt des Laserstrahls 7 in Richtung der positiven y-Achse. Die gewählten geometrischen Verhältnisse gewährleisten, daß eine Änderung der Objekthöhe $\Delta z$ eine gleichgroße Auslenkung des Abtastpunktes in y-Richtung $\Delta y$ bewirkt.

Diese Auslenkung kann direkt mit dem Empfänger gemessen werden, wozu insbesondere zwei Parameter von Interesse sind, nämlich die Remission und die Tiefe der Oberflächenstörung. Der Kontrast im mit der Wellenlänge des Laserscanners ausgeleuchteten Objekt entspricht dabei in guter Näherung einem mit der V(1)-Charakteristik aufgenommenen Grauwertbild des Werkstoffes Holz. Dieses Grauwertbild wird im Kanal 12 gebildet.

Innerhalb des Kanals 11 wird das Profil des Holzes gewonnen. Ein besonderer Vorteil der Anordnung ergibt sich bei den typischerweise verwendeten hohen Datenraten von ca. 100 MPixel/sec. Die Lage des Bildpunktes in y-Richtung wird durch die optische Anordnung in ein Verhältnis von zwei Lichtströmen $\phi'_1$ und $\phi'_2$ umgewandelt, das mit hoher Datenrate unabhängig vom konkreten Wert der Remission arbeitet, d.h., daß dunkle und helle Bildpunkte gleich behandelt werden. Dazu wird die Zwischenbildebene erzeugt, in der das Verlaufsfilter 18 angeordnet ist. Die Transmission des Verlaufsfilters 18 ist direkt proportional zur y-Auslenkung des Objektpunktes. Empfindlichkeitsschwankungen des Sensors über der abgetasteten Fläche (Shading) können über weitere Verlaufsfilter in beiden Kanälen in der Nähe der Zwischenbildebene oder -ebenen korrigiert werden.

Der Rechner 13 ist innerhalb des Gehäuses 4 angeordnet, der vorzugsweise ein echtzeitfähiger Rechner ist, der die Verarbeitung der beiden Fotoströme aus den optoelektrischen Empfangselementen 19, 20 vornimmt. Die Fotoströme können zuerst mit einem Transimpedanzverstärker mit geringem Linearitätsfehler vorverstärkt werden.

Die Lichtströme $\phi_1'$ und $\phi_2'$ werden in die Ausgangsströme der Fotodioden 19, 20 umgesetzt, so daß die folgende Gleichung gilt:

$$y_2'\text{-}y_{off}' = m\frac{\phi_2'}{\phi_1'} = m\frac{I_2}{I_1} \tag{1}$$

$\phi_1'$ -     Lichtstrom in Kanal 12
$\phi_2'$ -     Lichtstrom in Kanal 11
$m$ -     Anstieg
$y_2'$ -     Koordinate des Bildpunktes in der Zwischenbildebene
$y_{off}'$ -     konstanter Offset
$I_1, I_2$ -     Ausgangsströme

Die Parameter m und $y_{off}'$ sind Konstanten, die im wesentlichen vom neutralen Verlaufsfilter 18 bestimmt werden. Die Transmission $\tau$ (x,y) des Verlaufsfilters genügt der folgenden Gleichung:

$$\tau(x_2', y_2') = m_\tau\left(y_2' + \frac{y_{max}'}{2}\right) + n_\tau \tag{2}$$

$m_\tau, n_\tau$ -     Konstanten
$y_{max}'$ -     Bildfeldgröße in der Zwischenbildebene

$$-\frac{y_{max}}{2} \leq y_2' \leq \frac{y_{max}'}{2}$$

Dann gilt nach Gleichung (1):

$$\ln(y_2'\text{-}y_{off}') = \ln I_2 - \ln I_1 + const \tag{3}$$

Die Differenz der logarithmierten Ausgangsströme der Fotodioden ist somit unabhängig von der Größe der Remission des Objektpunktes.

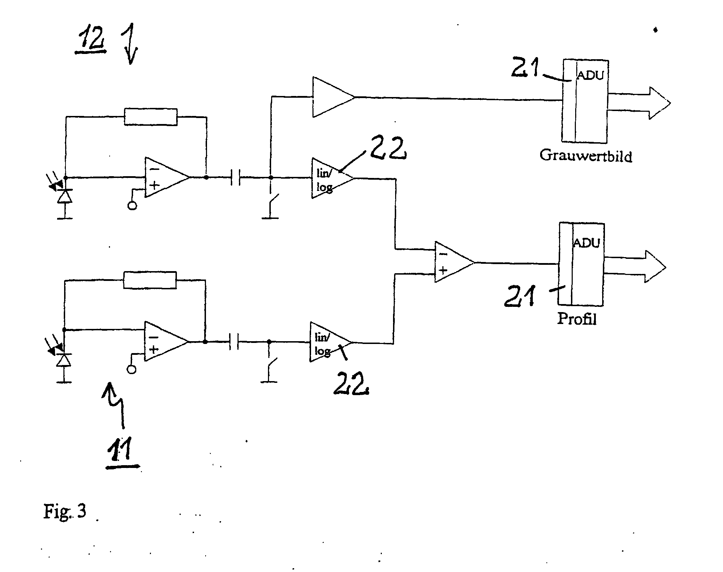

Ein elektrisches Blockschaltbild zur Auswertung der Fotoströme aus den beiden Kanälen 11 und 12 ist in Figur 3 dargestellt. Das AD-gewandelte Ausgangssignal des Kanals 12 erzeugt das Grauwertbild. Die Signale der Fotodioden 19, 20 werden, wie in der Fernsehtechnik üblich, mit Transimpedanzverstärkern verstärkt und anschließend am Zeilenanfang geklemmt. Nach der Klemmung werden beide Signale in logarithmierenden Operationsverstärkern 22 logarithmiert und über je einen ADU 21 quantisiert.

Das Verhältnis der Ausgangssignale bzw. der Lichtströme $\phi'_1$ und $\phi'_2$ kann digital oder gemäß Figur 3 mit Hinzuziehung einer analogen Vorverarbeitung erzeugt werden. Der Vorteil der analogen Vorverarbeitung besteht in einem höheren Dynamikbereich bzw. höheren Meßbereich der z-Koordinate. Das gleiche Ergebnis kann auch mit logarithmierenden ADU oder mit in mehrere Zweige aufgeteilte ADU 21 erreicht werden. In Beispiel wird das Profil durch logarithmierenden Operationsverstärker und nachfolgende Analog-Digital-Umwandler 21 gewonnen.

Der Koordinatensprung in der Gegenstandsebene wird auf die Koordinate $y_{max}$ gelegt, so daß Rißbildungen im Werkstoff (z>0) zu positiven y-Verschiebungen in der Gegenstandsebene führen. Das Ausgangssignal des Sensors ist somit ein logarithmisches Maß für Störungen der Oberfläche des Werkstoffs.

Bei der digitalen Signalverarbeitung kann in der Vorverarbeitung aus dem Profil eine Wahrscheinlichkeit $p_{profil}$ errechnet werden, die ein Maß für das tatsächliche Auftreten eines gesuchten Merkmals ist. Unter der Vielzahl der anwendungsspezifisch zu detektierenden Merkmale kann diejenige Gruppe, die durch eine eindeutige Störung des Profils beschrieben werden kann, über einen Convolver mit anschließendem Schwellwertvergleich gefunden werden. Darunter fallen beispielsweise Rißbildungen, Astlöcher und Oberflächenmängel durch abgenutzte Werkzeuge.

Innerhalb des Gehäuses 4 befindet sich ein Gebläse 14, welches innerhalb des Gehäuses 4 einen Überdruck erzeugt, der zwei Luftströme erzeugt, die durch den Schlitz 6 sowie die Eintrittspupille 9 ausströmen und dadurch verhindern, daß atmosphärische Verunreinigungen, wie Holzstaub, in das Gehäuse 4 eintreten und sich auf den Objektiven absetzen können.

Der Laserstrahl des Laserscanners 5 kann unter einem Winkel von 45 Grad, mit einer möglichen Abweichung von ±25 Grad, vorzugsweise jedoch nur ±15 Grad, zur Flächennormalen der Holzoberfläche auf diese einstrahlen, wobei der reflektierte Strahl in Richtung der Flächennormalen, mit einer möglichen Abweichung von ±25 Grad, vorzugsweise jedoch nur ±15 Grad, zurückfällt und auf die Empfangselemente geleitet wird, die bevorzugt positionsempfindliche optoelektrische Empfangselemente, wie PSD-Bauelemente, sein können.

Gewerbliche Anwendbarkeit:

Die Erfindung ist insbesondere in der Holz verarbeitenden Industrie anwendbar, da sie eine völlig selbstätige Inspektion der Oberfläche von Hölzern fortlaufend gestattet, wobei eine Reihe von Merkmalen, wie Risse, Astlöcher oder Überhöhungen und Vertiefungen wie auch wie das Profil der Hölzer, sicher erkannt werden und danach eine Aussortierung erfolgen kann und Rißbildungen eindeutig und in ihrer Ausdehnung erfaßt werden können.

Liste der Bezugszeichen:

| | |
|---|---|
| 1 | Holz |
| 2 | Astloch |
| 3 | Riß |
| 4 | Gehäuse |
| 5 | Laserscanner |
| 6 | Längsschlitz |
| 7 | Laserstrahl |
| 8 | remittierter Strahlenbündel |
| 9 | Bohrung oder Eintrittspupille |
| 10 | Teilerspiegel |
| 11,12 | Kanäle |
| 13 | Echtzeitrechner |
| 14 | Gebläse |
| 15,16,17 | Objektive |
| 18 | Verlaufsfilter |
| 19,20 | Fotodioden |
| 21 | Analog-Digital-Umsetzer |
| 22 | Logarithmierer |

**EP 0 787 970 B1**

**Patentansprüche**

1. Vorrichtung zur Inspektion der Oberfläche von Holz (1) zwecks Feststellung von Oberflächenmerkmalen (2, 3), wie Risse (3), Astlöcher (2) oder Überhöhungen und Vertiefungen, bestehend aus wenigstens einem optoelektrischen Sensor, einer analogen und/oder digitalen elektronischen und/oder optischen Vorverarbeitungseinheit sowie einem echtzeitfähigen Rechner (13), wobei das Holz (1) relativ zum Sensor bewegbar ist, sowie einem Inkrementgeber, der den Sensor mit der Geschwindigkeit des Holzes synchronisiert,
**dadurch gekennzeichnet, daß**

   a) der Sensor aus einem monochromatischen Laserscanner

   (5) und einem zum Empfang des Laserlichts geeigneten Empfänger mit wenigstens zwei Kanälen (11, 12) mit je einem optoelektrischen Empfangselement (19, 20) besteht;

   b) die Kanäle (11, 12) durch Strahlteilung des vorzugsweise in Richtung der Flächennormalen remittierten Strahlenbündels (8) gebildet sind;

   c) wenigstens in einem der Kanäle (11, 12) ein Objektiv (15) zum Erzeugen einer Zwischenbildebene angeordnet ist und nach dem Objektiv (15) innerhalb dieses Kanals (11) ein optisches Verlaufsfilter (18) angeordnet ist, welches den passierenden Lichtstrom auf das zugehörige optoelektrische Empfangselement (19) ortsabhängig zu modulieren im Stande ist, und die Signale des Empfangselementes (19) dieses Kanals (11) in ein Profilbild der Oberfläche gewandelt werden;

   d) mindestens ein Kanal (12) ohne Verlaufsfilter (18) ausgebildet ist und die Signale des Empfangselementes (20) dieses Kanals im Rechner (13) in ein Grauwertbild gewandelt werden.

2. Vorrichtung nach Anspruch 1, **dadurch gekennzeichnet, daß** zur Strahlteilung im remittierten Strahlenbündel (8) ein Strahlteiler, vorzugsweise Teilerspiegel (10), angeordnet ist, der das Strahlenbündel (8) vorzugsweise hälftig aufteilt und danach in jedem Teilstrahlenbündel hinter dem Strahlteiler (10) zur Fokussierung der Teil-Strahlenbündel auf die optoelektrischen Empfangselemente (19, 20) Linsen (16, 17) angeordnet sind.

3. Vorrichtung nach Anspruch 1 oder 2, **dadurch gekennzeichnet, daß** sich das Objektiv (15) zum Erzeugen einer Zwischenbildebene nach dem Teilerspiegel (10) und vor dem optischen Verlaufsfilter (18) innerhalb des mindestens einen Kanals (11), der ein optisches Verlaufsfilter (18) aufweist, befindet.

4. Vorrichtung nach Anspruch 1 oder 2, **dadurch gekennzeichnet, daß** sich das Objektiv (15) vor dem Teilerspiegel (10) befindet.

5. Vorrichtung nach Anspruch 1 oder 2, **dadurch gekennzeichnet, daß** der Sensor in einem Gehäuse (4) angeordnet ist, welches zum Austritt des Laserstrahls (7) einen schmalen, in der Länge der Auslenkung des Laserstrahls angepassten Längsschlitz (6) und zum Eintritt des remittierten Strahlenbündels (8) eine Bohrung (9) als Eintrittspupille aufweist, daß sich innerhalb des Gehäuses (4) eine Einrichtung (14) zur Erzeugung eines Luftüberdruckes befindet und der Luftüberdruck über den Längsschlitz (6) und die Eintrittspupille (9) nach außen abströmende Luftströme erzeugt.

6. Vorrichtung nach Anspruch 5, **dadurch gekennzeichnet, daß** die Eintrittspupille (9) einen sehr kleinen Durchmesser aufweist und zusammen mit dem Objektiv (15) vor dem Teilerspiegel (10) ein Nadelöhrobjektiv bildet.

7. Vorrichtung nach Anspruch 1, **dadurch gekennzeichnet, daß** die optoelektrischen Empfangselemente Fotodioden (19, 20), vorzugsweise pin-Fotodioden, sind.

8. Vorrichtung nach Anspruch 1, **dadurch gekennzeichnet, daß** das optoelektrische Empfangselement in jedem Kanal (11) mit optischem Verlaufsfilter (18) zur Modulation des Lichtstroms ein optopositionsempfindliches Bauelement, vorzugsweise ein hochgeschwindigkeitsfähiges PSD-Bauelement ist.

9. Vorrichtung nach Anspruch 1, **dadurch gekennzeichnet, daß** der Laserscanner (5) aus einem GaAs-Laser mit einem Polygon-Spiegelrad oder mit einem elastisch aufgehängten Mikrospiegel besteht.

**10.** Vorrichtung nach Anspruch 1, **dadurch gekennzeichnet, daß** alle Kanäle (11, 12) bis auf das optische Verlaufsfilter (18) gleich aufgebaut sind.

**11.** Verfahren zur Inspektion der Oberfläche von Holz (1) zwecks Feststellung von Oberflächenmerkmalen (2, 3) wie Risse (3), Astlöcher (2) oder Überhöhungen und Vertiefungen unter Verwendung wenigstens eines optoelektrischen Sensors, einer analogen und/oder digitalen elektronischen und/oder optischen Vorverarbeitungseinheit sowie eines echtzeitfähigen Rechners (13), wobei das Holz (1) relativ zum Sensor bewegt wird,
**dadurch gekennzeichnet, daß**
der Sensor aus einem monochromatischen Laserscanner (5) und einem zum Empfang des Laserlichts geeigneten Empfänger mit wenigstens zwei Kanälen (11, 12) mit je einem optoelektrischen Empfangselement (19, 20) besteht und dazu das vorzugsweise in Richtung der Flächennormalen remittierte Strahlenbündel (8) in wenigstens zwei Teilstrahlenbündel zerlegt und wenigstens in einem der Kanäle (11, 12) eine Zwischenbildebene erzeugt wird und der Lichtstrom desjenigen mindestens einen Kanals (11), in welchem die Zwischenbildebene erzeugt wird, ortsabhängig zur Auslenkung des Objektpunktes in Transportrichtung des Objektes innerhalb des Teilstrahlenbündels moduliert wird, während mindestens ein anderes Teilstrahlenbündel unverändert bleibt, wonach die Signale des Empfangselementes (20) des mindestens einen Kanales (12) ohne ortsabhängiger Modulation im Rechner (13) in ein Grauwertbild und diejenigen des mindestens einen anderen Kanals (11), dessen Lichtstrom ortsabhängig moduliert worden ist, in ein Profilbild der Oberfläche gewandelt werden.

**12.** Verfahren nach Anspruch 11, **dadurch gekennzeichnet, daß** die Lage des Bildpunktes in Transportrichtung des Objektes in ein Verhältnis der beiden Lichtströme umgewandelt wird, das unabhängig vom Wert der Remission ist.

**13.** Verfahren nach Anspruch 12, **dadurch gekennzeichnet, daß** das Verhältnis der Lichtströme in einer analogen oder digitalen oder analog/digitalen Vorverarbeitung erzeugt wird.

**14.** Verfahren nach Anspruch 12 oder 13, **dadurch gekennzeichnet, daß** bei einer digitalen Vorverarbeitung der Lichtströme aus dem sich ergebenden Profil eine Wahrscheinlichkeit als Maß für das tatsächliche Auftreten eines gesuchten Merkmals errechnet wird und die zu detektierenden Merkmale, die durch eine eindeutige Störung des Profils beschrieben werden können, mit einem Convolver mit anschließendem Schwellwertvergleich aufgefunden werden.

**15.** Verfahren nach einem der Ansprüche 11 bis 14, **dadurch gekennzeichnet, daß** der Laserstrahl des Laserscanners (5) unter einem Winkel von 45° mit einer möglichen Abweichung von ± 25°, vorzugsweise jedoch nur ± 15°, zur Normalen der Holzoberfläche auf diese einstrahlt und der reflektierte Strahl in Richtung der Normalen mit einer möglichen Abweichung von ± 25°, vorzugsweise ± 15°, auf die Empfangselemente (19, 20) fällt, die positionsempfindliche optoelektrische Empfangselemente, wie PSD-Bauelemente, sind.

**Claims**

**1.** Device for inspecting the surface of wood (1) for the purpose of determining surface features (2, 3), such as cracks (3), knot holes (2) or raised areas and indentations, consisting of at least one optoelectric sensor, an analog and/or digital electronic and/or optical pre-processing unit and also a real-time capable computer (13), wherein the wood (1) can be moved relative to the sensor, as well as an incrementer which synchronises the sensor to the speed of the wood,
**characterised in that**

a) the sensor consists of a monochromatic laser scanner (5) and a receiver suitable for receiving the laser light with at least two channels (11, 12), each with an optoelectric receiving element (19, 20);

b) the channels (11, 12) are formed by beam-splitting of the beam concentration (8), preferably diffusely reflected in the direction of the normal of the plane;

c) a lens (15) for generating an intermediate image plane is arranged at least in one of the channels (11, 12) and after the lens (15) inside this channel (11) is arranged an optical graduated filter (18), which is capable of modulating the passing light current on to the associated optoelectric receiving element (19), depending on the location, and the signals of the receiving element (19) of this channel (11) are converted into a profile image of the surface;

d) at least one channel (12) is constructed without a graduated filter (18) and the signals of the receiving element (20) of this channel are converted into a half-tone image in the computer (13).

2. Device according to claim 1, **characterised in that** for beam-splitting a beam splitter, preferably a separating reflector (10), which preferably splits the beam concentration (8) in half, is arranged in the diffusely reflected beam concentration (8), and then lenses (16, 17) are arranged in each partial beam concentration behind the beam splitter (10) for focusing the partial beam concentration on to the optoelectric receiving elements (19, 20).

3. Device according to claim 1 or 2, **characterised in that** the lens (15) for generating an intermediate image plane is located after the separating reflector (10) and in front of the optical graduated filter (18) inside the at least one channel (11) having an optical graduated filter (18).

4. Device according to claim 1 or 2, **characterised in that** the lens (15) is located in front of the separating reflector (10).

5. Device according to claim 1 or 2, **characterised in that** the sensor is arranged in a housing (4), which has a narrow longitudinal slit (6) matched in length to the excursion of the laser beam for the exit of the laser beam (7) and a bore (9) as entry aperture diaphragm for entry of the diffusely reflected beam concentration (8), inside the housing (4) there is a device (14) for generating excess air pressure and the excess air pressure generates air currents flowing away outwards via the longitudinal slit (6) and the entry aperture diaphragm (9).

6. Device according to claim 5, **characterised in that** the entry aperture diaphragm (9) has a very small diameter and together with the lens (15) forms a needle-eye lens in front of the separating reflector (10).

7. Device according to claim 1, **characterised in that** the optoelectric receiving elements are photodiodes (19, 20), preferably pin photodiodes.

8. Device according to claim 1, **characterised in that** the optoelectric receiving element in each channel (11) with an optical graduated filter (18) for modulating the light current is an optoposition-sensitive constructional element, preferably a PSD constructional element capable of high speed.

9. Device according to claim 1, **characterised in that** the laser scanner (5) consists of a GaAs laser with a polygonal reflecting wheel or with an elastically suspended micro-reflector.

10. Device according to claim 1, **characterised in that** all the channels (11, 12) are constructed identically except for the optical graduated filter (18).

11. Method for inspecting the surface of wood (1) for the purpose of determining surface features (2, 3), such as cracks (3), knot holes (2) or raised areas and indentations, using at least one optoelectric sensor, an analog and/or digital electronic and/or optical pre-processing unit and also a real-time capable computer (13), wherein the wood (1) is moved relative to the sensor,
**characterised in that**
the sensor consists of a monochromatic laser scanner (5) and a receiver suitable for receiving the laser light with at least two channels (11, 12), each with an optoelectric receiving element (19, 20), and additionally the beam concentration (8), preferably diffusely reflected in the direction of the normal of the plane, is divided into at least two partial beam concentrations and an intermediate image plane is generated at least in one of the channels (11, 12) and the light current of the at least one channel (11) in which the intermediate image plane is generated is modulated within the partial beam concentration, dependent on location, for the excursion of the object point in the direction of conveyance of the object, while at least one other partial beam concentration remains unchanged, whereafter the signals of the receiving element (20) of the at least one channel (12) are converted without location-dependent modulation in the computer (13) into a half-tone image and those of the at least one other channel (11), the light current of which has been modulated dependent on the location, are converted into a profile image of the surface.

12. Method according to claim 11, **characterised in that** the position of the image spot in the direction of conveyance of the object is converted into a ratio of the two light currents which is independent of the value of the diffuse reflection.

13. Method according to claim 12, **characterised in that** the ratio of the light currents is generated in analog or digital or analog/digital pre-processing.

14. Method according to claim 12 or 13, **characterised in that** in digital pre-processing of the light currents a probability is calculated from the resulting profile as the measurement for the actual occurrence of a feature sought and the features to be detected which can be described by an obvious disturbance of the profile are located with a convolver with subsequent comparison of the threshold values.

15. Method according to one of claims 11 to 14,
**characterised in that** the laser beam of the laser scanner (5) irradiates on to the surface of the wood at an angle of 45° with a possible deviation of ± 25°, preferably though only ± 15°, to the normal of the wood surface and the reflected beam falls in the direction of the normal with a possible deviation of ± 25°, preferably ± 15°, on to the receiving elements (19, 20), which are position-sensitive optoelectric receiving elements, such as PSD constructional elements.

## Revendications

1. Dispositif d'inspection de la surface d'une pièce de bois (1) pour la détermination de caractéristiques de surface (2, 3), comme des fissures (3), des trous de noeuds (2) ou des creux et des bosses, constitué d'au moins un capteur optoélectrique, d'une unité de prétraitement analogique et/ou numérique, électronique et/ou optique, et d'un calculateur en temps réel (13), la pièce de bois (1) pouvant être déplacée par rapport au capteur, ainsi que d'un générateur d'incréments qui synchronise le capteur avec la vitesse de la pièce de bois,
**caractérisé en ce que**

   a) le capteur est constitué d'un balayeur laser monochromatique (5), et d'un récepteur apte à recevoir la lumière laser et doté d'au moins deux canaux (11, 12) pourvus chacun d'un élément récepteur optoélectrique (19, 20);
   b) les canaux (11, 12) sont formés par division du faisceau (8) qui est réfléchi de préférence dans la direction de la normale à la surface ;
   c) un objectif (15) est disposé dans au moins un des canaux (11, 12) pour produire un plan d'image intermédiaire, et un filtre de champ optique (18) est disposé après l'objectif (15) dans ce canal (11), filtre qui est capable de moduler spatialement le flux lumineux dirigé sur l'élément récepteur optoélectrique associé (19), et les signaux de l'élément récepteur (19) de ce canal (11) sont transformés en une image du profil de la surface ;
   d) au moins un canal (12) est prévu sans filtre de champ (18), et les signaux de l'élément récepteur (20) de ce canal sont transformés en une image des valeurs de gris.

2. Dispositif selon la revendication 1, **caractérisé en ce que**, afin de diviser le faisceau, un diviseur de faisceau, de préférence un miroir diviseur (10), est disposé dans le faisceau réfléchi (8) et divise de préférence le faisceau (8) en deux moitiés, et des lentilles (16, 17) sont disposées après le diviseur de faisceau (10) dans chaque faisceau partiel afin de focaliser les faisceaux partiels sur les éléments récepteurs optoélectriques (19, 20).

3. Dispositif selon la revendication 1 ou 2, **caractérisé en ce que** l'objectif (15) destiné à produire un plan d'image intermédiaire se trouve après le miroir diviseur (10) et avant le filtre de champ optique (18) dans ledit au moins un canal (11) qui présente un filtre de champ optique (18).

4. Dispositif selon la revendication 1 ou 2, **caractérisé en ce que** l'objectif (15) se trouve avant le miroir diviseur (10).

5. Dispositif selon la revendication 1 ou 2, **caractérisé en ce que** le capteur est disposé dans un boîtier (4) qui présente, pour la sortie du faisceau laser (7), une étroite fente oblongue (6) dont la longueur est adaptée à la déviation du faisceau laser, et, pour l'entrée du faisceau réfléchi (8), un perçage (9) comme pupille d'entrée, et **en ce qu'**un appareil (14) pour produire une surpression d'air se trouve à l'intérieur du boîtier (4), et la surpression d'air produit des flux d'air qui s'évacuent vers l'extérieur par l'intermédiaire de la fente oblongue (6) et de la pupille d'entrée (9).

6. Dispositif selon la revendication 5, **caractérisé en ce que** la pupille d'entrée (9) possède un très petit diamètre et forme conjointement avec l'objectif (15) disposé avant le miroir diviseur (10) un objectif « trou d'aiguille ».

**7.** Dispositif selon la revendication 1, **caractérisé en ce que** les éléments récepteurs optoélectriques sont des photodiodes (19, 20), de préférence des photodiodes PIN.

**8.** Dispositif selon la revendication 1, **caractérisé en ce que** l'élément récepteur optoélectrique prévu dans chaque canal muni d'un filtre de champ optique (18) pour moduler le flux lumineux est un composant optique à détection de position, de préférence un composant PSD ultra-rapide.

**9.** Dispositif selon la revendication 1, **caractérisé en ce que** le balayeur laser (5) est constitué d'un laser GaAs doté d'une roue réflectrice polygonale ou d'un miroir miniature élastiquement suspendu.

**10.** Dispositif selon la revendication 1, **caractérisé en ce que** les canaux (11,12) sont tous de structure identique, à l'exception du filtre de champ optique (18).

**11.** Procédé d'inspection de la surface d'une pièce de bois (1) pour la détermination de caractéristiques de surface (2, 3), comme des fissures (3), des trous de noeuds (2) ou des creux et des bosses, en utilisant au moins un capteur optoélectrique, une unité de prétraitement analogique et/ou numérique, électronique et/ou optique, ainsi qu'un calculateur en temps réel (13), la pièce de bois (1) pouvant être déplacée par rapport au capteur,
**caractérisé en ce que**
le capteur est constitué d'un balayeur laser monochromatique (5) et d'un récepteur apte à recevoir la lumière laser et doté d'au moins deux canaux (11, 12) pourvus chacun d'un élément récepteur optoélectrique (19, 20), et le faisceau (8) qui est réfléchi de préférence dans la direction de la normale à la surface est décomposé en au moins deux faisceaux partiels et un plan d'image intermédiaire est produit dans au moins un des canaux (11, 12), et le faisceau lumineux dudit au moins un canal (11) dans lequel est produit le plan d'image intermédiaire est modulé spatialement afin de dévier le plan d'objet dans la direction de transport de l'objet à l'intérieur du faisceau partiel, tandis qu'au moins un autre faisceau partiel reste inchangé, à la suite de quoi les signaux de l'élément récepteur (20) dudit au moins un canal (12) dépourvu de modulation spatiale sont transformés dans le calculateur (13) en une image des valeurs de gris, et les signaux dudit au moins autre canal (11) dont le flux lumineux a été spatialement modulé sont transformés en une image du profil de la surface.

**12.** Procédé selon la revendication 11, **caractérisé en ce que** la position du point d'image dans la direction de transport de l'objet est transformée en un rapport des deux flux lumineux qui est indépendant de la valeur de la luminance de réflexion.

**13.** Procédé selon la revendication 12, **caractérisé en ce que** le rapport des flux lumineux est obtenu par un prétraitement analogique ou numérique ou analogique-numérique.

**14.** Procédé selon la revendication 12 ou 13, **caractérisé en ce que**, lors d'un prétraitement numérique des flux lumineux, on calcule à partir du profil obtenu une probabilité comme mesure de l'apparition effective d'une caractéristique recherchée, et les caractéristiques à détecter, qui peuvent être décrites par une perturbation univoque du profil, sont décelées par une convolution suivie d'une comparaison à une valeur de seuil.

**15.** Procédé selon l'une quelconque des revendications 11 à 14,
**caractérisé en ce que** le faisceau laser du balayeur laser (5) atteint la surface de la pièce de bois sous un angle de 45° par rapport à la normale à cette surface, avec un écart possible de ± 25°, mais de préférence de seulement ± 15°, et le faisceau réfléchi atteint les éléments récepteurs (19, 20), qui sont des éléments récepteurs optoélectriques à détection de position, tels que des composants PSD, dans la direction de la normale avec un écart possible de ± 25°, de préférence de ± 15°.

Fig. 1

Fig. 2

EP 0 787 970 B1

Fig. 3